(19) Europäisches Patentamt
European Patent Office
Office européen des brevets

(11) **EP 4 538 825 A1**

(12) **EUROPÄISCHE PATENTANMELDUNG**

(43) Veröffentlichungstag:
**16.04.2025 Patentblatt 2025/16**

(21) Anmeldenummer: **24204905.4**

(22) Anmeldetag: **07.10.2024**

(51) Internationale Patentklassifikation (IPC):
**G05D 23/19** (2006.01)  **G05D 27/02** (2006.01)
**G05D 22/02** (2006.01)  **F24F 11/00** (2018.01)

(52) Gemeinsame Patentklassifikation (CPC):
**G05D 23/1919; F24F 11/00; G05D 22/02; G05D 27/02**

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**
Benannte Erstreckungsstaaten:
**BA**
Benannte Validierungsstaaten:
**GE KH MA MD TN**

(30) Priorität: **11.10.2023 DE 102023127762**

(71) Anmelder: **REHAU Industries SE & Co. KG 95111 Rehau (DE)**

(72) Erfinder: **Pommer, Willi 90427 Nürnberg (DE)**

(54) **VERFAHREN ZUR STEUERUNG EINES HEIZ- UND KÜHLSYSTEMS IM KÜHLBETRIEB SOWIE HEIZ- UND KÜHLSYSTEM**

(57) Die vorliegende Erfindung betrifft ein Verfahren zur Steuerung eines Heiz- und Kühlsystems im Kühlbetrieb, wobei das Heiz- und Kühlsystem mindestens einen Gebläsekonvektor, ein Steuerungselement und Mittel zur Erfassung der Raumlufttemperatur und der relativen Luftfeuchtigkeit sowie Mittel zur Eingabe eines Raumtemperatursollwerts durch einen Nutzer umfasst, wobei das Steuerungselement aus dem Raumtemperatursollwert T_air_set, der erfassten Raumlufttemperatur T_air und der erfassten relativen Luftfeuchtigkeit einen korrigierten Raumtemperatursollwert T_air_set_new ermittelt, und wobei der Kühlbetrieb des Heiz- und Kühlsystems den korrigierten Raumtemperatursollwert T_air_set_new zugrunde legt. Darüber hinaus betrifft die vorliegende Erfindung ein Heiz- und Kühlsystem, das mindestens einen Gebläsekonvektor, ein Steuerungselement und Mittel zur Erfassung der Raumlufttemperatur und der relativen Luftfeuchtigkeit sowie Mittel zur Eingabe eines Raumtemperatursollwerts durch einen Nutzer umfasst, wobei das Steuerungselement zur Vorgabe der Verfahrensschritte zur Durchführung eines derartigen Verfahrens ausgelegt ist.

Fig. 1

EP 4 538 825 A1

**Beschreibung**

Die vorliegende Erfindung betrifft ein Verfahren zur Steuerung eines Heiz- und Kühlsystems im Kühlbetrieb, wobei das Heiz- und Kühlsystem mindestens einen Gebläsekonvektor, ein Steuerungselement und Mittel zur Erfassung der Raumlufttemperatur und der relativen Luftfeuchtigkeit sowie Mittel zur Eingabe eines Raumtemperatursollwerts durch einen Nutzer umfasst. Darüber hinaus betrifft die vorliegende Erfindung ein Heiz- und Kühlsystem zur Durchführung des erfindungsgemäßen Verfahrens.

Es ist im Stand der Technik bekannt, in Heiz- und Kühlsystemen zur Beheizung und Kühlung von Räumen, Gebäudeteilen oder Gebäuden als Sollwertvorgabe einen Lufttemperaturvorgabewert zu verwenden. Darüber hinaus ist es im Stand der Technik bekannt, beim Einsatz eines Entfeuchters oder beim Betrieb einer Klimaanlage zusätzlich einen Sollwert und/oder einen Grenzwert für die relative Luftfeuchte und/oder den Taupunkt, der den Wassergehalt der Luft wiedergibt, vorzugeben. Dieser Feuchtesollwert beeinflusst die Arbeitsweise der Klimaanlage oder startet den Betrieb eines Entfeuchters.

Es ist weiter bekannt, dass die empfundene Raumtemperatur neben der reinen Lufttemperatur von verschiedenen Einflussfaktoren wesentlich abhängt, beispielsweise vom persönlichen Empfinden, der Bekleidung, der gegenwärtigen oder gerade vergangenen Tätigkeit, dem Strahlungsanteil, der Luftgeschwindigkeit sowie der Feuchte der Luft. In der Norm DIN EN ISO 7730 werden diese Abhängigkeiten beschrieben. Der Einfluss der Luftfeuchte wird in dieser Norm zwar bei normalen Wohnraumbedingungen als gering erachtet, es werden jedoch in der Literatur, beispielsweise in "Frank, W., Berichte aus der Bauforschung - Raumklima und thermische Behaglichkeit (1975) oder "Leusden, F.P. und Freymark, H., Darstellung der Raumbehaglichkeit für den einfachen praktischen Gebrauch (1951)" sogenannte Behaglichkeitsfelder definiert, die einen Bereich im sogenannten hx-Diagramm markieren. Damit sind bestimmte Kombinationen aus Lufttemperatur und relativer Luftfeuchte entweder innerhalb des Behaglichkeitsfeldes (z.B. 23°C, r.F. zwischen 35% and 55% r.F.), innerhalb des Feldes "noch behaglich" (z.B. 24°C, 55% r.F.) oder außerhalb (z.B. 25°C, 65% r.F).

Beim Einsatz eines Gebläsekonvektors, als einziges zur Kühlung einsetzbares Element in einem Heiz- und Kühlsystemen oder in Verbindung mit einem Flächensystem, ist es durch offenkundige Vorbenutzung bekannt, den Betrieb des Gebläsekonvektors in Abhängigkeit von der gemessenen Lufttemperatur und der Sollwertvorgabe für die Raumtemperatur zu steuern. Die beim Einsatz eines Gebläsekonvektors im Kühlbetrieb (mit geeigneter Temperatur des für das Kühlregister verwendeten Wassers) auftretende Entfeuchtung der Luft wirkt hierbei komfortsteigernd, die Luftfeuchtigkeit wird jedoch von der Regelung nicht betrachtet, so dass der Gebläsekonvektor seinen Betrieb beendet bzw. in einen Erhaltungsbetrieb übergeht, sobald der Sollwert der Raumlufttemperatur erreicht ist. So wird abhängig vom gewählten Sollwert der Raumtemperatur der Betrieb des Gebläsekonvektors bei einem Luftzustand beendet, der zwar dem vorgegebenen Wert der Raumlufttemperatur entspricht, jedoch vom Nutzer als zu warm empfunden wird. In diesem Fall wird der Benutzer bzw. Nutzer händisch den Sollwert verändern, um behaglichere Verhältnisse zu erzielen. Dieser neu eingestellte Sollwert, der niedriger ist als der vorher eingestellte, gilt ab diesem Zeitpunkt so lange, bis er durch erneuten Nutzereingriff oder durch einen automatisch erfolgenden Eingriff durch das Steuerungselement wieder auf den vorherigen Wert gestellt wird. Der Weiterbetrieb mit dem niedrigen Sollwert wird jedoch möglicherweise in der Folge wiederum zu unbehaglichen Zuständen, da der Raum nun als zu kühl empfunden wird, sowie damit auch zu unnötigem Energieverbrauch führen.

An dieser Stelle setzt die vorliegende Erfindung ein, der die Aufgabe zugrunde liegt, die Nachteile des Stands der Technik zumindest teilweise zu überwinden. Insbesondere soll das erfindungsgemäße Verfahren zur Steuerung eines Heiz- und Kühlsystems im Kühlbetrieb dafür sorgen, dass der Betrieb des Gebläsekonvektors bei einem Luftzustand beendet wird, den der Nutzer bzw. Benutzer bei gewähltem Sollwert der Raumtemperatur als behaglich empfindet. Darüber hinaus soll unnötiger Energieverbrauch durch den Betrieb des Gebläsekonvektors vermieden werden.

Diese und andere Aufgaben werden durch ein Verfahren zur Steuerung eines Heiz- und Kühlsystems im Kühlbetrieb mit den Merkmalen des Anspruchs 1 sowie durch ein Heiz- und Kühlsystem mit den Merkmalen des Anspruchs 10 gelöst. Bevorzugte Ausführungsformen der vorliegenden Erfindung sind in den abhängigen Ansprüchen beschrieben.

Gemäß der vorliegenden Erfindung wurde erkannt, dass ein vorzeitiges Beenden des Betriebs des Gebläsekonvektors und/oder der vorzeitige Übergang des Gebläsekonvektors in den Erhaltungsbetrieb dadurch verhindert werden kann, dass die durch den Betrieb des Gebläsekonvektors veränderte Luftfeuchtigkeit zur Steuerung des Betriebs des Gebläsekonvektors zusätzlich zur herrschenden Raumtemperatur und zum gewünschten Sollwert der Raumtemperatur entsprechend berücksichtigt wird. Erfindungsgemäß wird dies dadurch realisiert, dass der Kühlbetrieb des Gebläsekonvektors so gesteuert wird, dass die vom Nutzer empfundene Temperatur automatisch berücksichtigt wird. Hierzu wird neben der gemessenen Raumlufttemperatur und der relativen Luftfeuchte auch ein Wert der empfundenen Raumtemperatur berücksichtigt. Die Abweichung zwischen empfundener Raumtemperatur und Raumlufttemperatur wird verwendet, um einen neuen Raumluftsollwertsollwert für die Ansteuerung des Gebläsekonvektors zu ermitteln. Darüber hinaus wird durch einen derartigen Betrieb des Gebläsekonvektors auch ein unnötiger Energieverbrauch vermieden, weil ein Nachjustieren des gewählten Sollwerts der Raumtemperatur, bis ein für den Nutzer angenehmer Zustand bei geringerer Luftfeuchtigkeit erreicht ist, durch den Nutzer nicht vorgenommen werden muss.

Dementsprechend stellt die vorliegende Erfindung ein Verfahren zur Steuerung eines Heiz- und Kühlsystems im Kühlbetrieb, wobei das Heiz- und Kühlsystem mindestens einen Gebläsekonvektor, ein Steuerungselement und Mittel zur Erfassung der Raumlufttemperatur und der relativen Luftfeuchtigkeit sowie Mittel zur Eingabe eines Raumtemperatursollwerts durch einen Nutzer umfasst, wobei das Steuerungselement aus dem Raumtemperatursollwert T_air_set, der erfassten Raumlufttemperatur T_air und der erfassten relativen Luftfeuchtigkeit einen korrigierten Raumtemperatursollwert T_air_set_new ermittelt, und wobei der Kühlbetrieb des Heiz- und Kühlsystems den korrigierten Raumtemperatursollwert T_air_set_new zugrunde legt. Darüber hinaus stellt die vorliegende Erfindung ein Heiz- und Kühlsystem zur Verfügung, das mindestens einen Gebläsekonvektor, ein Steuerungselement und Mittel zur Erfassung der Raumlufttemperatur und der relativen Luftfeuchtigkeit sowie Mittel zur Eingabe eines Raumtemperatursollwerts durch einen Nutzer umfasst, wobei das Steuerungselement zur Vorgabe der Verfahrensschritte zur Durchführung eines erfindungsgemäßen Verfahrens ausgelegt ist.

Dabei kann der Betrieb des Gebläsekonvektor bei Erreichen des korrigierten Raumtemperatursollwert T_air_set_new beendet oder in einen Erhaltungsbetrieb übergehen, bei dem der Gebläsekonvektor vorzugsweise dafür sorgt, dass der korrigierte Raumtemperatursollwert T_air_set_new zumindest näherungsweise im zeitlichen Mittel aufrechterhalten wird.

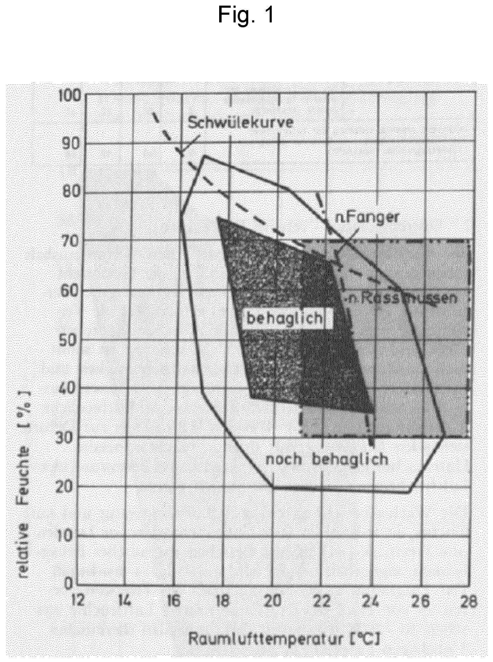

Wie hierin verwendet steht der Begriff "behaglich" für eine Kombination aus Raumlufttemperatur in °C und relativer Luftfeuchtigkeit (relative Feuchte) in %, die in dem hx-Diagramm gemäß "Leusden, F.P. und Freymark, H., Darstellung der Raumbehaglichkeit für den einfachen praktischen Gebrauch (1951)", das in Fig. 1 dargestellt ist, in den Bereichen "noch behaglich" oder "behaglich" liegt. Darüber hinaus bezeichnet der Begriff "behaglicher" wie hierin verwendet einen Zustand, dessen Kombination aus entsprechender Raumlufttemperatur in °C und relativer Luftfeuchtigkeit (relative Feuchte) in % näher am Zentrum des Bereichs "behaglich" in dem hx-Diagramm gemäß "Leusden, F.P. und Freymark, H., Darstellung der Raumbehaglichkeit für den einfachen praktischen Gebrauch (1951)" (vgl. Fig. 1) liegt als der Vergleichszustand.

In Bezug auf das erfindungsgemäße Verfahren kann es bevorzugt sein, wenn der korrigierte Raumtemperatursollwert T_air_set_new einem vom Nutzer als behaglichler empfundenen Zustand als der ursprünglich vorgegebene Sollwert T_air_set entspricht. Dies kann zur Erzielung eines für den Nutzer behaglichen Zustands bei geringem Energieverbrauch bereits ausreichend sein.

Ebenso kann hilfreich sein, wenn die Ermittlung des korrigierten Raumtemperatursollwert T_air_set_new die folgenden Stufen umfasst:

a) Errechnen einer durch den Nutzer empfundenen Temperatur T_perceived als Funktion der Lufttemperatur T_air, der relativen Luftfeuchte oder der Lufttemperatur und des Taupunkts T_dewpoint der Luft;
b) Errechnen eines Korrekturwerts T_corr für den Raumlufttemperatursollwert T_air_set dieses Raums, der sich gemäß

$$T\_corr = (T\_perceived - T\_air) \times k$$

ergibt, wobei die Eingriffsstärke des Verfahrens durch den Wert des Faktors k bestimmt wird, wobei

i) k den Wert 0 annimmt, wenn T_Dewpoint < T_Dewpoint limit - Delta;
ii) k linear im Bereich T_Dewpoint limit - Delta bis T_Dewpoint limit ansteigt bis zu einem einstellbaren Wert k_max;
iii) T_corr zu Null gesetzt wird. wenn T_perceived kleiner T_air ist; und
iv) T_corr begrenzt auf einen einstellbaren Wert T_corr_max wird;

c) Errechnen des korrigierten Raumtemperatursollwert T_air_set_new gemäß

$$T\_air\_setpoint\_new = T\_air\_set - T\_corr.$$

Dabei ist T_air die erfasste Raumlufttemperatur.

Darüber hinaus sind T_Dewpoint limit, Delta und k_max vorzugsweise am Steuerungselement einstellbare Werte. T_Dewpoint limit stellt somit die als grenzwertig zu bezeichnende Taupunkttemperatur dar, bei der es erwünscht ist, dass das Verfahren mit maximaler Eingriffsstärke arbeitet, wobei das Verfahren seine Eingriffsstärke linear reduziert bis hin zu der bei der Taupunkttemperatur T_Dewpoint limit - Delta, bei der das Verfahren beendet wird, da der Zielwert erreicht wurde. Der Wertebereich für T_Dewpoint limit ist vorzugsweise von 18°C bis 12°C zu wählen.Der Wertebereich für Delta ist vorzugsweise von 0,5K bis 4K zu wählen. Der Wertebereich für K_max ist vorzugsweise von 0,2 bis 2,0 zu wählen.

Werden beispielsweise die Werte T_Dewpoint limit = 15°C, Delta = 2K und k_max = 1 gewählt, so arbeitet das Verfahren oberhalb einer Taupunkttemperatur von 15°C mit maximaler Eingriffsstärke; die Differenz zwischen T_air und T_perceived wird hierbei mit dem Faktor k = k_max = 1 gewichtet und für die Berechnung des Sollwerts T_air_setpoint_new verwendet. Mit absinkendem Taupunkt reduziert sich der Faktor k und damit auch der Korrekturwert T_corr, bis er bei T_Dewpoint limit - Delta = 15°C - 2K = 13°C den Wert 0 annimmt.

Um eine hohe Behaglichkeit für den Nutzer zu erreichen, ist es bevorzugt, wenn die Stufen a) bis c) zyklisch durchlaufen werden, insbesondere über einen längeren Zeitraum zyklisch durchlaufen werden. Die Anpassung des korrigierten Raumtemperatursollwerts T_air_set_new erfolgt dadurch laufend, so dass durch die beim Betrieb des Gebläsekonvektors auftretende Reduzierung der Luftfeuchtigkeit sich eine veränderte gefühlte Raumtemperatur ergibt. Für den Nutzer entfällt somit die Notwendigkeit, den Sollwert je nach Empfinden zu korrigieren. Daraus resultiert gegenüber einer Regelung nach dem Stand der Technik eine Komfortsteigerung für den Nutzer. Ständige Sollwertänderungen durch den Nutzer werden vermieden, was zur Energieeinsparung beiträgt.

T_corr_max ist vorzugsweise ein Wert, der von der gewünschten Behaglichkeit des Nutzers und der Energieeffizienz abhängt, und liegt vorzugsweise im Bereich von Null (bei höchster Energieeffizienz) bis 2K (bei höchster Behaglichkeit). Diese Grenzen der Werte für T_corr max können auch durch einen im Steuerungselement hinterlegten globalen Behaglichkeitsindex beeinflusst werden, der vom Nutzer gleitend zwischen höchster Behaglichkeit, ausgeglichenem Betrieb und höchster Energieeffizienz eingestellt werden kann.

Es ist ganz besonders bevorzugt, dass T_air setpoint new nicht kleiner als ein Vorgabewert T_air_set_min ist. T_air_set_min kann dabei vorzugsweise am Steuerungselement eingegeben werden oder durch das Steuerungselement vorgegeben sein.

Durch diese Berechnung des korrigierten Raumtemperatursollwert T_air_set_new wird der Kühlbetrieb des Gebläsekonvektors in vorteilhafter Weise so gesteuert, dass die vom Nutzer empfundene Temperatur T_perceived automatisch berücksichtigt wird. Hierzu wird über eine Näherungsformel aus der gemessenen Raumlufttemperatur und der relativen Luftfeuchte ein Wert der empfundenen Raumtemperatur errechnet. Die Abweichung zwischen empfundener Raumtemperatur und Raumlufttemperatur wird verwendet, um einen neuen Raumluftsollwertsollwert T_air_set_new für die Ansteuerung des Gebläsekonvektors zu ermitteln.

Die Berechnung des Werts für die empfundene Raumtemperatur T_perceived aus der gemessenen Raumlufttemperatur und der relativen Luftfeuchte erfolgt vorzugsweise gemäß

$$\text{T\_perceived} = \text{T\_air} + (\text{rh}/50) * (\text{T\_air}/3 - 3{,}146) - 4$$

worin T_perceived wiederum für die empfundene Temperatur, T_air für die gemessene Raumlufttemperatur und rh für die relative Luftfeuchtigkeit in % steht.

Es kann auch günstig sein, wenn das Heiz- und Kühlsystem darüber hinaus Heiz- und Kühlflächen umfasst. Auf diese Weise ist gewährleistet, dass es möglich ist, den Gebläsekonvektor nur für Räume einzusetzen, in denen sein Gebrauch für das Erreichen eines für den Nutzer angenehmen Raumklimas auch tatsächlich erforderlich ist. Dies können beispielsweise Wohnräume, Büroräume, Verkaufsräume und dgl. sein, in denen aufgrund hoher Personenzahlen eine starke Kühlung erforderlich ist.

Dabei kann es hilfreich sein, wenn das Verfahren nur zur Steuerung des Gebläsekonvektors eingesetzt wird. Der weitere Kühlbetrieb durch die Heiz- und Kühlflächen kann dann bevorzugt auf Basis des ursprünglichen Sollwerts T_air_set erfolgen. Dadurch kann durch den Betrieb des Gebläsekonvektors eine Abkühlung und Entfeuchtung der Luft erzielt werden.

Alternativ dazu kann es günstig sein, wenn das Verfahren zur Steuerung des Gebläsekonvektors und der Heiz- und Kühlflächen eingesetzt wird. Dadurch kann durch den Betrieb des Gebläsekonvektors neben der Entfeuchtung der Luft auch eine Steigerung der Kühlleistung erzielt werden.

Es kann auch hilfreich sein, wenn im Steuerungselement ein globaler Behaglichkeitsindex vorgegeben ist, der vom Nutzer zwischen höchster Behaglichkeit, ausgeglichenem Betrieb und höchster Energieeffizienz eingestellt werden kann, um den Bereich der möglichen Variation des korrigierten Raumtemperatursollwerts T_air_set_new gegenüber dem vom Nutzer eingestellten Raumtemperatursollwert T_air_set einzuschränken. Auf diese Weise lässt sich das erfindungsgemäße Verfahren auf die vom Nutzer gewünschte Behaglichkeit anpassen.

Die voranstehenden Erläuterungen in Bezug auf das erfindungsgemäße Verfahren zur Steuerung eines Heiz- und Kühlsystems gelten für das erfindungsgemäße Heiz- und Kühlsystem entsprechend.

Die vorliegende Erfindung wurde exemplarisch unter Bezugnahme auf bestimmte Ausführungsformen der vorliegenden Erfindung im Detail beschrieben. Es versteht sich, dass die vorliegende Erfindung nicht auf diese Ausführungsformen beschränkt ist. Vielmehr ergibt sich der Umfang der vorliegenden Erfindung aus den beigefügten Ansprüchen.

**Patentansprüche**

1. Verfahren zur Steuerung eines Heiz- und Kühlsystems im Kühlbetrieb, wobei das Heiz- und Kühlsystem mindestens einen Gebläsekonvektor, ein Steuerungselement und Mittel zur Erfassung der Raumlufttemperatur und der relativen Luftfeuchtigkeit sowie Mittel zur Eingabe eines Raumtemperatursollwerts durch einen Nutzer umfasst, wobei das Steuerungselement aus dem Raumtemperatursollwert T_air_set, der erfassten Raumlufttemperatur T_air und der erfassten relativen Luftfeuchtigkeit einen korrigierten Raumtemperatursollwert T_air_set_new ermittelt, und wobei der Kühlbetrieb des Heiz- und Kühlsystems den korrigierten Raumtemperatursollwert T_air_set_new zugrunde legt.

2. Verfahrend nach Anspruch 1, **dadurch gekennzeichnet, dass** der korrigierte Raumtemperatursollwert T_air_set_new einem vom Nutzer als behaglicher empfundenen Zustand als der ursprünglich vorgegebene Sollwert T_air_set entspricht.

3. Verfahren nach Anspruch 1 oder Anspruch 2, **dadurch gekennzeichnet, dass** die Ermittlung des korrigierten Raumtemperatursollwert T_air_set_new die folgenden Stufen umfasst:

   a) Errechnen einer durch den Nutzer empfundenen Temperatur T_perceived als Funktion der Lufttemperatur T_air, der relativen Luftfeuchte oder der Lufttemperatur und des Taupunkts T_dewpoint der Luft;
   b) Errechnen eines Korrekturwerts T_corr für den Raumlufttemperatursollwert T_air_set dieses Raums, der sich gemäß

$$T\_corr = (T\_perceived - T\_air) \times k$$

   ergibt, wobei die Eingriffsstärke des Verfahrens durch den Wert des Faktors k bestimmt wird, wobei

   i) k den Wert 0 annimmt, wenn T_Dewpoint < T_Dewpoint limit - Delta, wobei T_Dewpoint limit und Delta einstellbare Werte sind;
   ii) k linear im Bereich T_Dewpoint limit - Delta bis T_Dewpoint limit ansteigt bis zu einem einstellbaren Wert k_max;
   iii) T_corr zu Null gesetzt wird. wenn T_perceived kleiner T_air ist; und
   iv) T_corr begrenzt wird auf einen einstellbaren Wert T_corr_max

   c) Errechnen des korrigierten Raumtemperatursollwert T_air_set_new gemäß

$$T\_air\_setpoint\_new = T\_air\_set - T\_corr.$$

4. Verfahren nach Anspruch 3, **dadurch gekennzeichnet, dass** die Stufen a) bis c) zyklisch durchlaufen werden.

5. Verfahren nach Anspruch 3 oder Anspruch 4, wobei T_corr_max auf einen Wert zwischen 0 und 2K einstellbar ist.

6. Verfahren nach einem der Ansprüche 1 bis 5, **dadurch gekennzeichnet, dass** das Heiz- und Kühlsystem darüber hinaus Heiz- und Kühlflächen umfasst.

7. Verfahren nach Anspruch 6, **dadurch gekennzeichnet, dass** das Verfahren nur zur Steuerung des Gebläsekonvektors eingesetzt wird.

8. Verfahrend nach Anspruch 6, **dadurch gekennzeichnet, dass** das Verfahren zur Steuerung des Gebläsekonvektors und der Heiz- und Kühlflächen eingesetzt wird.

9. Verfahren nach einem der Ansprüche 1 bis 8, **dadurch gekennzeichnet, dass** im Steuerungselement ein globaler Behaglichkeitsindex vorgegeben ist, der vom Nutzer zwischen höchster Behsaglichkeit, ausgeglichenem Betrieb und höchster Energieeffizienz eingestellt werden kann, um den Bereich der möglichen Variation des korrigierten Raumtemperatursollwerts T_air_set_new gegenüber dem vom Nutzer eingestellten Raumtemperatursollwert T_air_set einzuschränken.

10. Heiz- und Kühlsystem, umfassend mindestens einen Gebläsekonvektor, ein Steuerungselement und Mittel zur Erfassung der Raumlufttemperatur und der relativen Luftfeuchtigkeit sowie Mittel zur Eingabe eines Raumtemperatursollwerts durch einen Nutzer, wobei das Steuerungselement zur Vorgabe der Verfahrensschritte zur Durchführung eines Verfahrens nach einem der Ansprüche 1 bis 9 ausgelegt ist.

Fig. 1

Europäisches
Patentamt

European
Patent Office

Office européen
des brevets

# EUROPÄISCHER RECHERCHENBERICHT

**Nummer der Anmeldung**

EP 24 20 4905

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | US 2021/302052 A1 (TRINH KEVIN [CA]) 30. September 2021 (2021-09-30) * Absätze [0006] - [0008], [0041], [0073] - [0096] * * Abbildungen 1-12 * | 1-10 | INV. G05D23/19 G05D27/02 G05D22/02 F24F11/00 |
| A | US 2014/277756 A1 (BRUCE BRADLEY STEVE [US] ET AL) 18. September 2014 (2014-09-18) * das ganze Dokument * | 1-10 | |

**RECHERCHIERTE SACHGEBIETE (IPC)**

G05D

Der vorliegende Recherchenbericht wurde für alle Patentansprüche erstellt

| Recherchenort | Abschlußdatum der Recherche | Prüfer |
|---|---|---|
| München | 31. Januar 2025 | Pöllmann, H |

KATEGORIE DER GENANNTEN DOKUMENTE

X : von besonderer Bedeutung allein betrachtet
Y : von besonderer Bedeutung in Verbindung mit einer
   anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder
   nach dem Anmeldedatum veröffentlicht worden ist
D : in der Anmeldung angeführtes Dokument
L : aus anderen Gründen angeführtes Dokument
...................................................................
& : Mitglied der gleichen Patentfamilie, übereinstimmendes
   Dokument

EPO FORM 1503 03.82 (P04C03)

## ANHANG ZUM EUROPÄISCHEN RECHERCHENBERICHT
## ÜBER DIE EUROPÄISCHE PATENTANMELDUNG NR.

EP 24 20 4905

In diesem Anhang sind die Mitglieder der Patentfamilien der im obengenannten europäischen Recherchenbericht angeführten Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

31-01-2025

| Im Recherchenbericht angeführtes Patentdokument | Datum der Veröffentlichung | Mitglied(er) der Patentfamilie | Datum der Veröffentlichung |
|---|---|---|---|
| US 2021302052 A1 | 30-09-2021 | US 2021302052 A1<br>US 2024117986 A1 | 30-09-2021<br>11-04-2024 |
| US 2014277756 A1 | 18-09-2014 | KEINE | |

EPO FORM P0461

Für nähere Einzelheiten zu diesem Anhang : siehe Amtsblatt des Europäischen Patentamts, Nr.12/82

**IN DER BESCHREIBUNG AUFGEFÜHRTE DOKUMENTE**

**In der Beschreibung aufgeführte Nicht-Patentliteratur**

- **FRANK, W.** *Berichte aus der Bauforschung - Raumklima und thermische Behaglichkeit*, 1975

- **LEUSDEN, F.P.** ; **FREYMARK, H.** *Darstellung der Raumbehaglichkeit für den einfachen praktischen Gebrauch*, 1951